# EUROPÄISCHE PATENTSCHRIFT

(11) **EP 3 933 526 B1**
(45) Veröffentlichungstag und Bekanntmachung des Hinweises auf die Patenterteilung: **30.10.2024**
(21) Anmeldenummer: 21182757.1
(22) Anmeldetag: 30.06.2021
(51) Int. Cl.: G05B 19/4065, B23Q 17/24

(54) **VERFAHREN ZUM ÜBERWACHEN UND STEUERN EINER WERKZEUGMASCHINE UND WERKZEUGMASCHINE**
MACHINE TOOL AND METHOD FOR MONITORING AND CONTROLLING A MACHINE TOOL
PROCÉDÉ DE SURVEILLANCE ET DE COMMANDE D'UNE MACHINE-OUTIL ET MACHINE-OUTIL

(30) Priorität: 01.07.2020 DE 102020117316
(43) Veröffentlichungstag der Anmeldung: 05.01.2022
(73) Patentinhaber: HOMAG GmbH, 72296 Schopfloch (DE)
(72) Erfinder: Würz, Jonathan, 72175 Dornhan (DE)
(74) Vertreter: Hoffmann Eitle

(56) Entgegenhaltungen:
- EP-A1- 3 021 183
- JP-A- 2021 024 008
- US-A1- 2002 003 415
- US-A1- 2019 294 139

## Beschreibung

### Technisches Gebiet

Die Erfindung betrifft ein Verfahren zum Überwachen und Steuern einer Werkzeugmaschine für die Bearbeitung von Werkstücken sowie eine Werkzeugmaschine zum Bearbeiten von Werkstücken.

### Stand der Technik

Aus der DE 197 26 345 A1 geht ein Verfahren zum Vermeiden und Identifizieren eines Werkzeugbruchs in einer Werkzeugmaschine hervor. Bei diesem Verfahren werden akustische Signale, die durch ein Bearbeitungswerkzeug während eines Bearbeitungsvorgangs erzeugt werden, durch eine Sensoreinrichtung akustisch erfasst und einer Auswerteeinheit übermittelt. Diese wertet die aufgezeichneten akustischen Signale anhand entsprechender Auswertealgorithmen aus, um bei einer Veränderung der akustischen Signale einen zu erwartenden oder einen aufgetretenen Werkzeugbruch zu identifizieren. Da die durch das Bearbeitungswerkzeug erzeugten akustischen Signale durch eine Vielzahl akustischer Störfaktoren beeinflusst werden können, beispielsweise weitere Betriebsgeräusche der Werkzeugmaschine, können fehlerhafte Identifizierungen von Werkzeugbrüchen auftreten.

Die US 2019/0294139 A1 beschreibt eine Werkzeugmaschine zum Bearbeiten von Werkstücken. Diese Werkzeugmaschine bildet ein Bearbeitungszentrum, welches ein Revolvermagazin zum Aufnehmen mehrerer Bearbeitungswerkzeuge aufweist. Das Revolvermagazin ermöglicht das Einwechseln und Befestigen eines der mehreren Bearbeitungswerkzeuge an einer Spindel, um einen Bearbeitungsvorgang mit einem definierten Bearbeitungswerkzeug auszuführen. Die Werkzeugmaschine umfasst eine Einrichtung zum Erkennen eines Werkzeugverschleiß, wobei hierfür eine Kamera um das eingewechselte Bearbeitungswerkzeug herumgeführt wird, um aus verschiedenen Richtungen mehrere Bilder des Bearbeitungswerkzeugs zu erfassen und aus diesen Bildern ein exaktes dreidimensionales Modell des Bearbeitungswerkzeugs zu erzeugen. Durch einen Vergleich zwischen einem solchen dreidimensionalen Modell vor dem Bearbeitungsvorgang und nach dem Bearbeitungsvorgang kann eine Anomalie an dem Bearbeitungswerkzeug ermittelt werden.

Die US 2002/0003415 A1 offenbart eine Werkzeugmaschine zum Bearbeiten von Werkstücken durch ein Bearbeitungswerkzeug. Diese Werkzeugmaschine umfasst eine Kameraeinrichtung, um einen Werkzeugdefekt oder Werkzeugverschleiß zu erfassen. Hierzu ist das Bearbeitungswerkzeug an einer Schwenkeinrichtung angeordnet, so dass dieses aus einer Gebrauchsposition in eine Erfassungsposition geschwenkt werden kann, um durch die Kameraeinrichtung erfasst zu werden.

Aus der JP 2021 024 008 A ist ein Maschinensystem bekannt, das eine Vielzahl Bearbeitungsmaschinen umfasst. Bei diesem System ist jede Bearbeitungsmaschine mit einer visuellen Anzeige ausgestattet, die durch Leuchten einen fehlerhaften Betriebszustand der Maschine anzeigt. Eine in einer Maschinenhalle installierte Kamera ist eingerichtet, die visuelle Anzeige zu erfassen, um die jeweilige fehlerhafte Bearbeitungsmaschine zu identifizieren.

### Darstellung der Erfindung

Der Erfindung liegt die Aufgabe zugrunde, ein Verfahren zum Überwachen und Steuern einer Werkzeugmaschine vorzuschlagen, durch welches eine geringe Fehlerrate bei der Bearbeitung von Werkstücken erreicht ist. Zudem ist es Aufgabe der Erfindung eine Werkzeugmaschine vorzuschlagen, welche eine einfache Überwachung und Steuerung eines Bearbeitungsvorgangs ermöglicht.

Ein Verfahren zum Überwachen und Steuern einer Werkzeugmaschine ist in Anspruch 1 definiert. Eine Werkzeugmaschine zum Bearbeiten von Werkstücken ist in Anspruch 10 definiert. Unteransprüche beziehen sich auf bestimmte Ausführungsformen.

Die Aufgabe wird durch ein Verfahren zum Überwachen und Steuern einer Werkzeugmaschine für die Bearbeitung von Werkstücken, insbesondere Werkstücke, die zumindest teilweise aus Holz, einem Holzwerkstoff, Kunststoff, Verbundwerkstoff oder dergleichen ausgebildet sind, mit einer Mehrzahl Bearbeitungswerkzeuge zum Ausführen eines Bearbeitungsvorgangs sowie mit wenigstens einem Werkzeugträger, der die Mehrzahl Bearbeitungswerkzeuge aufnimmt, gelöst, wobei zumindest ein Istzustand der Bearbeitungswerkzeuge und/oder des wenigstens einen Werkzeugträgers durch eine Bilderfassungseinrichtung optisch erfasst wird und Bildinformationen des zumindest einen Istzustands einer Steuerungseinrichtung übermittelt werden, wobei die Bilderfassungseinrichtung durch nur eine Kamera (16) ausgebildet ist, aus den Bildinformationen zumindest ein Parameter der Bearbeitungswerkzeuge und/oder des wenigstens einen Werkzeugträgers ermittelt wird und die Steuerungseinrichtung in Abhängigkeit von dem zumindest einen Parameter ein Steuerungssignal ausgibt. Vor dem Ausführen des Bearbeitungsvorgangs und/oder nach einem Einwechseln wenigstens eines Bearbeitungswerkzeugs wird ein Sollzustand der Bearbeitungswerkzeuge durch die Bilderfassungseinrichtung optisch erfasst und Bildinformationen des optisch erfassten Sollzustands werden der Steuerungseinrichtung übermittelt, wobei der Istzustand der Bearbeitungswerkzeuge in definierten Zeitintervallen oder nach einer definierten Anzahl Bearbeitungsvorgänge durch die Bilderfassungseinrichtung optisch erfasst wird, wobei die Bilderfassungseinrichtung zum Erfassen des Sollzustands und zum Erfassen des Istzustands die Bearbeitungswerkzeuge gleichzeitig optisch erfasst, und der Istzustand und der Sollzustand durch die Steuerungseinrichtung miteinander verglichen werden und bei einer ermittelten Abweichung zwischen dem Istzustand und dem Sollzustand ein Werkzeugdefekt identifiziert wird und das Steuerungssignal ausgegeben wird. Aus den Bildinformationen des Sollzustands und aus den Bildinformationen des Istzustands werden von jedem Bearbeitungswerkzeug wenigstens ein Werkzeugparameter ermittelt und von jedem Bearbeitungswerkzeug der wenigstens eine Werkzeugparameter des Istzustands mit dem wenigstens einen Werkzeugparameter des Sollzustands verglichen und bei einer Abweichung zwischen den Werkzeugparametern ein Werkzeugdefekt des jeweiligen Bearbeitungswerkzeugs identifiziert und das Steuerungssignal ausgegeben.

Indem bei diesem Verfahren zumindest ein Parameter der Bearbeitungswerkzeuge und/oder des Werkzeugträgers optisch ermittelt wird, d.h. durch die Bilderfassungseinrichtung ein visuelles Bild aufgenommen wird, aus welchem der zumindest eine Parameter ermittelt wird, kann ein zuverlässiges Verfahren erreicht sein, um ein Steuerungssignal zum Überwachen und Steuern der Werkzeugmaschine in Abhängigkeit von diesem Parameter auszugeben. Durch das Steuerungssignal kann vorzugsweise eine Überwachung der Bearbeitungswerkzeuge erfolgen und/oder eine Überwachung bzw. Steuerung einer Positionierung der Bearbeitungswerkzeuge. Die Bilderfassungseinrichtung aufweist nur eine Kamera, durch die die Bearbeitungswerkzeuge und/oder der Werkzeugträger optisch erfasst werden.

Eine Werkzeugmaschine mit einer solchen Mehrzahl Bearbeitungswerkzeuge kann insbesondere ein Mehrspindelbohrer sein. Ein Werkzeug mit mehreren Bearbeitungswerkzeugen kann ein Bohrgetriebe bilden. Vorzugsweise führen die Bearbeitungswerkzeuge den Bearbeitungsvorgang zeitgleich aus. Dadurch ist es ermöglicht, in einem Bearbeitungsvorgang durch jedes Bearbeitungswerkzeug einen Bearbeitungsschritt auszuführen. Beispielsweise kann mit einem Mehrspindelbohrer durch nur einen Werkzeughub zeitgleich eine entsprechende Anzahl Bohrlöcher in ein oder mehrere Werkstücke eingebracht werden. Dadurch, dass die Bearbeitungswerkzeuge durch die Bilderfassungseinrichtung gleichzeitig optisch erfasst werden, d.h. der Istzustand bzw. der Sollzustand werden von der Bilderfassungseinrichtung durch das Erfassen eines Bildes von allen Bearbeitungswerkzeuge bestimmt, kann eine sehr schnelle Identifizierung eines Werkzeugdefekts erfolgen.

Durch das Erfassen des Sollzustands vor dem Ausführen eines Bearbeitungsvorgangs und/oder nach einem Einwechseln wenigstens eines Bearbeitungswerkzeugs kann ein Referenzwert eines unbeschädigten Bearbeitungswerkzeugs ermittelt werden. Indem dieser Referenzwert mit dem nachfolgend erfassten Istzustand der Bearbeitungswerkzeuge verglichen wird, kann ein Werkzeugdefekt, beispielsweise ein Werkzeugbruch oder Werkzeugverschleiß, ermittelt werden. Wird der Istzustand in kurzen Zeit- oder Bearbeitungsintervallen erfasst, kann eine kontinuierliche Überwachung des wenigstens einen Bearbeitungswerkzeugs vorgesehen sein und dadurch eine frühzeitige Erkennung eines Werkzeugdefekts ermöglicht sein.

Somit kann eine Ausschussmenge aufgrund einer fehlerhaften Bearbeitung von Werkstücken minimiert werden kann.

Eine weitere vorteilhafte Ausgestaltung des Verfahrens kann vorsehen, dass aus den Bildinformationen des zumindest einen Istzustands und/oder des Sollzustands ein dreidimensionales Modell wenigstens eines Bearbeitungswerkzeugs und/oder des wenigstens einen Werkzeugträgers durch die Steuerungseinrichtung erstellt wird und der zumindest eine Parameter aus dem dreidimensionalen Modell der Bildinformationen ermittelt wird.

Durch die Erstellung des dreidimensionalen Modells kann eine präzise Ermittlung des zumindest einen Parameters erreicht sein, wodurch eine zuverlässige Überwachung und Steuerung der Werkzeugmaschine ermöglicht ist.

Eine weitere vorteilhafte Weiterbildung des Verfahrens kann vorsehen, dass der zumindest eine aus den Bildinformationen des Sollzustands und aus den Bildinformationen des Istzustands ermittelte Parameter der Werkzeugparameter der Bearbeitungswerkzeuge ist, insbesondere eine Werkzeugform, eine Werkzeuglänge, ein Werkzeugdurchmesser und/oder ein vergleichbarer Werkzeugparameter, wobei durch die Steuerungseinrichtung der wenigstens eine Werkzeugparameter des Istzustands mit dem wenigstens einen Werkzeugparameter des Sollzustands verglichen wird und bei einer Abweichung zwischen dem Werkzeugparameter des Istzustands und dem Werkzeugparameter des Sollzustands der Werkzeugdefekt des wenigstens einen Bearbeitungswerkzeugs identifiziert wird und das Steuerungssignal ausgegeben wird.

Dadurch, dass der aus den Bildinformationen ermittelte Parameter der Werkzeugparameter ist, kann durch den Vergleich zwischen den Werkzeugparametern eine unmittelbare Beurteilung des Werkzeugzustands, also ob das Bearbeitungswerkzeug beschädigt ist, erfolgen. Indem aus den Bildinformationen nur der zumindest eine Werkzeugparameter ermittelt wird, kann zudem eine Datenmenge, die durch die Steuerungseinrichtung für den Vergleich zwischen dem Istzustand und dem Sollzustand verarbeitet werden muss, reduziert werden. Somit kann eine schnelle Datenverarbeitung und Erkennung eines Werkzeugdefekts, vorzugsweise in Echtzeit, erreicht sein.

Eine weitere Ausgestaltung des Verfahrens kann vorsehen, dass durch das Steuerungssignal eine Ausgabeeinheit angesteuert wird und ein Fehlersignal über die Ausgabeeinheit ausgegeben wird oder durch das Steuerungssignal die Werkzeugmaschine angesteuert wird und in einen Fehlerzustand überführt wird oder durch das Steuerungssignal ein automatisierter Werkzeugwechsel für das betreffende Bearbeitungswerkzeug angesteuert wird.

Durch das Ausgeben des Fehlersignals über die Ausgabeeinheit kann ein Bediener über den Werkzeugdefekt informiert werden, so dass dieser den Bearbeitungsvorgang frühzeitig unterbrechen und das defekte Bearbeitungswerkzeug austauschen kann. Ebenso kann die Werkzeugmaschine durch das Steuerungssignal automatisiert angehalten werden, um keine weiteren fehlerhaften Werkstücke durch ein gebrochenes bzw. defektes Bearbeitungswerkzeug zu fertigen. Besonders vorteilhaft kann bei einem identifizierten Werkzeugdefekt ein automatisierter Werkzeugwechsel des betreffenden Bearbeitungswerkzeugs angesteuert werden, wodurch ein vollautomatisierter Betrieb der Werkzeugmaschine ermöglicht sein kann.

Die Aufgabe wird zudem durch eine Werkzeugmaschine zum Bearbeiten von Werkstücken, insbesondere Werkstücke, die zumindest teilweise aus Holz, einem Holzwerkstoff, Kunststoff, Verbundwerkstoff oder dergleichen ausgebildet sind, mit einer Mehrzahl Bearbeitungswerkzeuge zum Ausführen eines Bearbeitungsvorgangs sowie mit einer Werkstückaufnahme zum Aufnehmen wenigstens eines zu bearbeitenden Werkstücks, gelöst, wobei eine Bilderfassungseinrichtung vorgesehen ist, durch die ein Sollzustand und/oder Istzustand der Bearbeitungswerkzeuge und/oder des wenigstens einen Werkzeugträgers optisch erfassbar ist sowie eine Steuerungseinrichtung, durch die ein Verfahren gemäß einer der zuvor beschriebenen Ausführungsformen ausführbar ist. Durch eine solche Werkzeugmaschine kann eine einfache Überwachung und Steuerung eines Bearbeitungsvorgangs vorgesehen sein, wobei sowohl eine einfache und schnelle Identifizierung einer Beschädigung des wenigstens einen Bearbeitungswerkzeugs ermöglicht sein kann als auch eine Kontrolle und Steuerung einer Position des wenigstens einen Bearbeitungswerkzeugs.

Die Bilderfassungseinrichtung aufweist nur eine Kamera, durch die der Sollzustand und/oder Istzustand der Bearbeitungswerkzeuge und/oder des wenigstens einen Werkzeugträgers optisch erfassbar ist. Dadurch kann neben einer vollständigen Erfassung jedes Bearbeitungswerkzeugs und/oder jedes Werkzeugträgers auch die Erstellung eines dreidimensionalen Modells des wenigstens einen Bearbeitungswerkzeugs und/oder des wenigstens einen Werkzeugträgers vorgesehen sein. Dieses dreidimensionale Modell kann durch die Steuerungseinrichtung aus den Bildinformationen erstellbar sein. Das dreidimensionale Modell ermöglicht ein präzises Ermitteln des zumindest einen Parameters.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer offenbarungsgemäßen Werkzeugmaschine mit einer Bilderfassungseinrichtung;
- Fig. 2: eine Detailansicht der Werkzeugmaschine gemäß Figur 1;
- Fig. 3: eine Detailansicht einer alternativen Ausgestaltung der Werkzeugmaschine;
- Fig. 4: eine weitere Detailansicht der Werkzeugmaschine gemäß Figur 1;
- Fig. 5: ein exemplarisches Binärbild der Bilderfassungseinrichtung;

### Beschreibung von Ausführungsformen

Gleiche Bezugszeichen, die in verschiedenen Figuren aufgeführt sind, benennen identische, einander entsprechende, oder funktionell ähnliche Elemente.

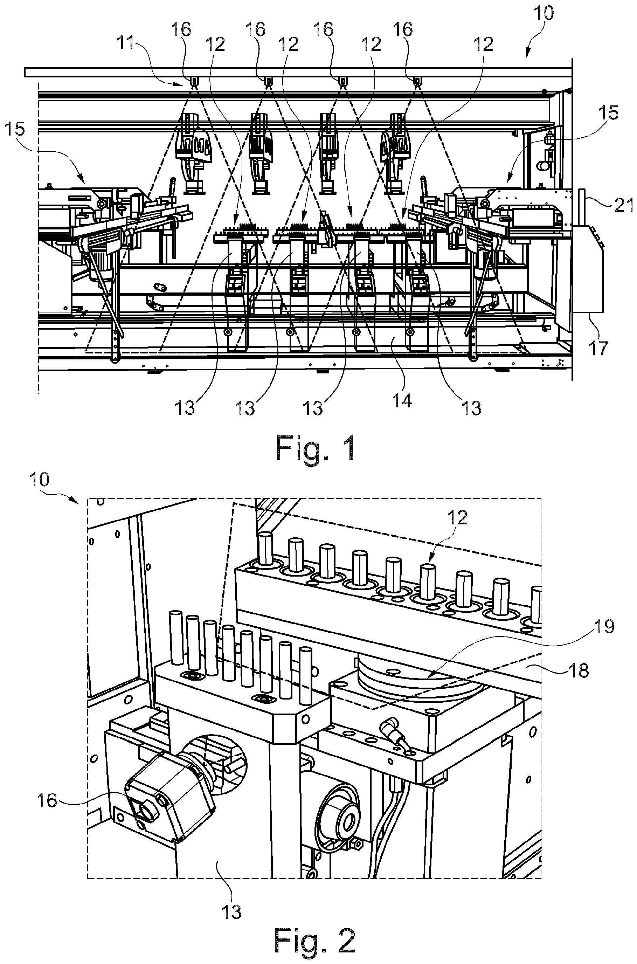

Figur 1 zeigt eine perspektivische Ansicht einer Werkzeugmaschine 10 mit einer Bilderfassungseinrichtung 11. Die Werkzeugmaschine 10 weist eine Mehrzahl Bearbeitungswerkzeuge 12 auf, um an einem oder mehreren nicht näher dargestellten Werkstücken einen Bearbeitungsvorgang auszuführen. Insbesondere ist die Werkzeugmaschine 10 als eine Bohrmaschine ausgebildet, die eine Mehrzahl Bohrwerkzeuge aufweist. Die Bearbeitungswerkzeuge 12 bilden ein Bohrgetriebe. Eine solche Werkzeugmaschine 10 wird auch als Mehrspindelbohrer bezeichnet. Die Werkzeugmaschine 10 kann mehrere Werkzeugträger 13 aufweisen, an denen jeweils mehrere Bearbeitungswerkzeuge 12, vorzugsweise Bohrgetriebe, angeordnet sind. Die Werkzeugträger 13 können durch eine Positioniereinrichtung 14 relativ zueinander bewegt werden, um die Bearbeitungswerkzeuge 12 für den Bearbeitungsvorgang zum Werkstück zu positionieren.

Mit einer solchen Werkzeugmaschine 10 können eine Vielzahl Bohrlöcher, insbesondere Lochreihen oder Lochmuster, gleichzeitig - d.h. mit nur einem Hub der Bearbeitungswerkzeuge 12 - in ein oder mehrere Werkstücke eingebracht werden. Das Einbringen solcher Lochreihen oder Lochmuster kommt insbesondere bei der Fertigung von Möbelteilen zum Einsatz. Alternativ können die Bearbeitungswerkzeuge 12 jedoch auch als beliebige andere Bearbeitungswerkzeuge 12 ausgebildet sein, beispielsweise als Fräswerkzeuge, Sägewerkzeuge oder dergleichen.

Die Werkzeugmaschine 10 ist insbesondere als eine Durchlaufmaschine ausgebildet, bei welcher das Bearbeiten der Werkstücke im Durchlaufverfahren vorgesehen ist. Zum Halten eines oder mehrerer Werkstücke während des Bearbeitungsvorgangs weist die Werkzeugmaschine 10 eine Werkstückaufnahme 15 auf. Ebenso kann die Werkzeugmaschine 10 als eine stationäre Werkzeugmaschine ausgebildet sein. Auch kann die Werkzeugmaschine 10 als eine CNC-gesteuerte Werkzeugmaschine ausgebildet sein oder ein CNC-gesteuertes Bearbeitungszentrum bilden.

Insbesondere ist die Werkzeugmaschine 10 zur Bearbeitung von Werkstücken vorgesehen, die zumindest teilweise aus Holz, einem Holzwerkstoff, Kunststoff, Verbundwerkstoff oder dergleichen ausgebildet sind. Insbesondere sind die Werkstücke als plattenförmige Werkstücke ausgebildet, beispielsweise als Massivholz- oder Spanplatten, Leichtbauplatten, Sandwichplatten oder dergleichen. Es versteht sich, dass die Werkzeugmaschine 10 jedoch nicht auf das Bearbeiten von Werkstücken mit derartigen Geometrien oder aus derartigen Werkstoffen beschränkt ist.

In einer Ausführungsform, die nicht von der vorliegenden Erfindung abgedeckt ist, weist die Bilderfassungseinrichtung 11 mehrere Kameras 16 auf, durch welche die Bearbeitungswerkzeuge 12 und/oder die Werkzeugträger 13 optisch erfassbar sind. Gemäß Figur 1 umfasst die Bilderfassungseinrichtung 11 vier Kameras 16.

In der vorliegenden Erfindung ist die Bilderfassungseinrichtung 11 durch nur eine Kamera 16 ausgebildet Die Bilderfassungseinrichtung 11 ist mit einer Steuerungseinrichtung 17 verbunden, welcher die durch die Kameras 16 optisch erfassten Bildinformationen übermittelt werden.

Wie in Figur 1 gezeigt, können die Kameras 16 oberhalb der Bearbeitungswerkzeuge 12 angeordnet sein. Ergänzend oder alternativ können Kameras 16 auch in einer anderen Position an der Werkzeugmaschine 10 vorgesehen sein, wie dies exemplarisch in den Figuren 2 bis 4 gezeigt ist. Insbesondere sind die Kameras 16 außerhalb eines unmittelbaren Bearbeitungsbereiches der Werkzeugmaschine 10 angeordnet, um Verschmutzungen der Optik zu vermeiden. Zum Vermeiden von Verschmutzungen bzw. zum Reinigen der Kameras 16 kann diesen eine nicht näher dargestellte Drucklufteinrichtung zugeordnet sein.

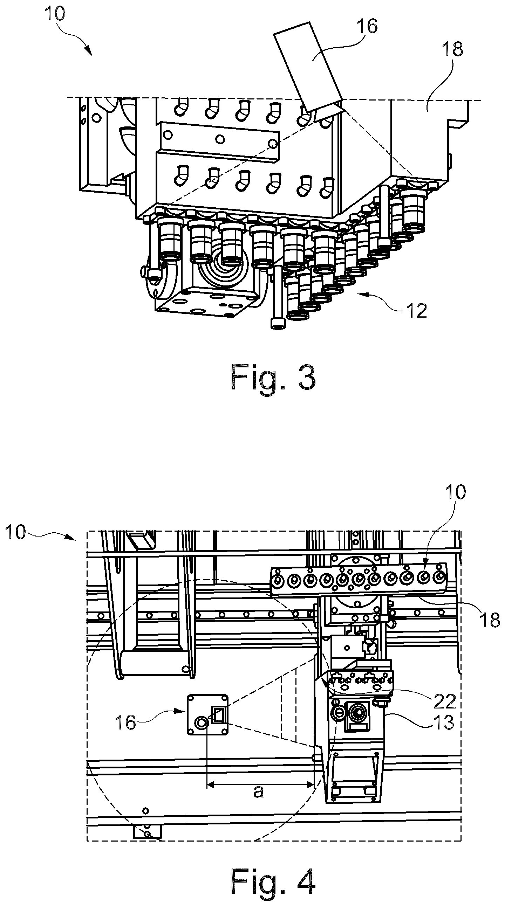

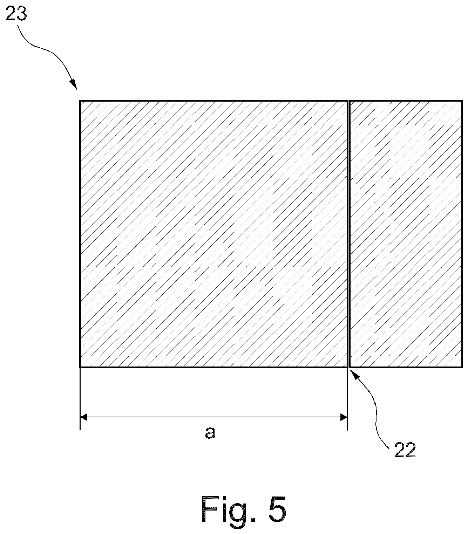

Durch die Bilderfassungseinrichtung 11 kann ein Istzustand der Bearbeitungswerkzeuge 12 und/oder der Werkzeugträger 13 optisch erfasst werden. Dieser Istzustand ist ein durch die Kamera 16 aufgenommenes Bild, d.h. eine Momentaufnahme, der Bearbeitungswerkzeuge 12 und/oder der Werkzeugträger 13. Die Bildinformationen des Istzustands werden der Steuerungseinrichtung 17 übermittelt und durch diese weiterverarbeitet. Durch die Weiterverarbeitung werden aus den Bildinformationen Parameter der Bearbeitungswerkzeuge 12 und/oder der Werkzeugträger 13 ermittelt. Hierzu können die Bildinformationen hinsichtlich der erfassten Bearbeitungswerkzeuge und/oder Werkzeugträger segmentiert werden. Durch die ermittelten Parameter ist eine Überwachung und Steuerung der Werkzeugmaschine 10 ermöglicht, wobei in Abhängigkeit von den Parametern zum einen eine Identifizierung eines Werkzeugdefekts erfolgen kann, wie nachfolgend in Bezug auf die Figuren 2 und 3 beschrieben wird, und zum anderen eine Positionierung der Bearbeitungswerkzeuge 12 angesteuert werden kann, wie dies nachfolgend in Bezug auf die Figuren 4 und 5 beschrieben wird.

Durch eine zueinander beabstandete Anordnung mehrerer Kameras 16 kann der Istzustand und/oder ein Sollzustand der Bearbeitungswerkzeuge 12 und/oder Werkzeugträger 13 zudem aus verschiedenen Kamerawinkeln optisch erfasst werden. Aus diesen Bildinformationen kann ein dreidimensionales Modell der Bearbeitungswerkzeuge 12 und/oder Werkzeugträger 13 durch die Steuerungseinrichtung 17 erstellt werden. Aus diesem dreidimensionalen Modell kann der Parameter der Bearbeitungswerkzeuge 12 und/oder der Werkzeugträger 13 ermittelt werden.

Figur 2 zeigt eine Detailansicht der Werkzeugmaschinen 10 gemäß Figur 1 mit einer Kamera 16 der Bilderfassungseinrichtung 11. Diese Kamera 16 ist benachbart zu den Bearbeitungswerkzeugen 12 am Werkzeugträger 13 angeordnet. Die Bearbeitungswerkzeuge 12 sind am Bohrgetriebe 18 in einer Reihe nebeneinander liegend angeordnet. Das Bohrgetriebe 18 ist mit einer drehbaren Aufnahme 19 am Werkzeugträger 13 vorgesehen. Mit einem solchen Bohrgetriebe 18 können Lochreihen in Werkstücke gebohrt werden.

Durch die Kamera 16 ist ein gemeinsames Erfassen der Bearbeitungswerkzeuge 12 vorgesehen. Dadurch ist eine schnelle Erfassung des Istzustands der Bearbeitungswerkzeuge 12 sowie das Erfassen eines zusätzlichen Sollzustands der Bearbeitungswerkzeuge 12 ermöglicht. Durch einen Vergleich zwischen dem erfassten Istzustand und dem Sollzustand kann ein Werkzeugdefekt, beispielsweise ein Werkzeugbruch der Bearbeitungswerkzeuge 12, identifiziert werden, was nachfolgend näher erläutert wird.

Der Sollzustand der Bearbeitungswerkzeuge 12 wird vor dem Ausführen des Bearbeitungsvorgangs erfasst. Ebenso kann vorgesehen sein, dass der Sollzustand der Bearbeitungswerkzeuge 12 nach einem bzw. jedem Einwechseln eines neuen Bearbeitungswerkzeugs 12 erfasst wird. Der so erfasste Sollzustand dient somit als Vergleichszustand bzw. Referenzzustand der Bearbeitungswerkzeuge 12, mit dem der Istzustand zum Identifizieren eines Werkzeugdefekts durch die Steuerungseinrichtung 17 verglichen wird.

Der Istzustand der Bearbeitungswerkzeuge 12 wird nach einer definierten Anzahl Bearbeitungsvorgänge oder in definierten Zeitintervallen durch die Bilderfassungseinrichtung 11 erfasst. Insbesondere vergleicht die Steuerungseinrichtung 17 nach jedem Erfassen des Istzustands, diesen mit dem zuvor erfassten Sollzustand, um einen Werkzeugdefekt zu identifizieren. Indem kurze Intervalle zwischen dem Erfassen des Istzustands vorgesehen sind, kann ein rechtzeitiges identifizieren eines Werkzeugdefekts erreicht sein.

Zum Vergleichen des Istzustands mit dem Sollzustand wird aus den Bildinformationen von jedem Bearbeitungswerkzeug 12 wenigstens ein Werkzeugparameter ermittelt. Dieser Werkzeugparameter ist insbesondere eine Werkzeugform, eine Werkzeuglänge, ein Werkzeugdurchmesser, eine Bohrwendelsteigung und/oder ein vergleichbarer Werkzeugparameter. Durch die Steuerungseinrichtung 17 wird von jedem Bearbeitungswerkzeug 12 der wenigstens eine Werkzeugparameter des Istzustands mit dem wenigstens einen Werkzeugparameter des Sollzustands verglichen. Bei einer Abweichung zwischen den Werkzeugparametern aufgrund eines beschädigten, gebrochenen oder verschlissenen Bearbeitungswerkzeugs 12, d.h. die Werkzeugform, die Werkzeuglänge, der Werkzeugdurchmesser und/oder der vergleichbare Werkzeugparameter des Istzustands ist nicht identisch zu der Werkzeugform, der Werkzeuglänge, dem Werkzeugdurchmesser und/oder dem vergleichbaren Werkzeugparameter des Sollzustands, identifiziert die Steuerungseinrichtung 17 einen Werkzeugdefekt und gibt ein entsprechendes Steuerungssignal aus.

Durch die Ermittlung des Werkzeugparameters kann zudem eine Überprüfung einer korrekten Bestückung des Bohrgetriebes 18 mit dem entsprechenden Bearbeitungswerkzeug 12 vorgesehen sein. Bohrgetriebe 18 können als linksdrehende oder rechtsdrehende Bohrgetriebe 18 ausgebildet sein. Entsprechenden der Drehrichtung des Bohrgetriebes 18 muss die Bohrwendelsteigung linksgedreht oder rechtsgedreht ausgebildet sein. Entsprechend der Drehrichtung des Bohrgetriebes 18 können das Bohrgetriebe 18 oder der Werkzeugträger 13 eine Identifizierungseinrichtung aufweisen, beispielsweise eine unterschiedliche farbliche Markierung, ein Barcode, QR-Code oder ähnliches. Die Identifizierungseinrichtung kann durch die Bilderfassungseinrichtung 11 erfasst werden und die erfasste Identifizierungsinformation an die Steuerungseinrichtung 17 übermittelt werden. Die Steuerungseinrichtung 17 vergleicht die erfasste Identifizierungsinformation mit dem ermittelten Werkzeugparameter, insbesondere mit der ermittelten Bohrwendelsteigung. Die Steuerungseinrichtung 17 vergleicht folglich den Werkzeugparameter, insbesondere eine linksgedrehte oder rechtsgedrehte Bohrwendelsteigung, mit der erfassten Identifizierungsinformation und gibt beim Ermitteln einer Korrekten Bestückung ein entsprechendes Steuerungssignal aus.

Das Steuerungssignal kann eine Ausgabeeinheit 21 ansteuern, durch welche einem Bediener der Werkzeugmaschine 10 ein den Werkzeugdefekt betreffendes Fehlersignal ausgegeben wird. Ebenso kann vorgesehen sein, dass die Werkzeugmaschine 10 durch das Steuerungssignal in einen Fehlerzustand überführt wird. Dadurch erfolgt bei einem Werkzeugdefekt eine automatisierte Unterbrechung des Bearbeitungsvorgangs, so dass keine weiteren fehlerhaften Werkstücke gefertigt werden.

Die Werkzeugmaschine 10 kann zudem eine nicht näher dargestellte Werkzeugwechselvorrichtung aufweisen, die durch das Steuerungssignal ansteuerbar ist. Auf diese Weise kann nach dem Identifizieren eines Werkzeugdefekts ein automatisierter Werkzeugwechsel angesteuert werden und das beschädigte Bearbeitungswerkzeug 12 ausgewechselt werden.

Figur 3 zeigt exemplarisch eine alternative Ausgestaltung eines Bohrgetriebes 18, bei welchem die Bearbeitungswerkzeuge 12 T-förmig zueinander angeordnet sind. Auch bei dieser Ausführungsform ist die Kamera 16 der Bilderfassungseinrichtung 11 in der Weise angeordnet, dass diese die Bearbeitungswerkzeuge 12 zum Ermitteln des Sollzustands und des Istzustands gemeinsam erfasst. Das Identifizieren eines Werkzeugdefekts erfolgt bei dieser Werkzeugmaschine 10 auf gleiche Weise wie dies vorhergehend bezüglich Figur 2 beschrieben ist.

Figur 4 zeigt eine weitere Detailansicht der Werkzeugmaschine 10 gemäß Figur 1. Diese zeigt eine Kamera 16 der Bilderfassungseinrichtung 11, welche einen der Werkzeugträger 13 zur Bestimmung einer Position des Werkzeugträgers 13 optisch erfasst. Die Kamera 16 ist in Figur 4 in einer ergänzenden bzw. in einer alternativen Anordnung zu der in Figur 1 gezeigten Anordnung oberhalb des Bearbeitungsbereichs der Werkzeugmaschine 10 vorgesehen. Es kann vorgesehen sein, dass jedem Werkzeugträger 13 eine Kamera 16 zugeordnet ist, um den Istzustand des jeweiligen Werkzeugträgers 13 zu erfassen. Die nachfolgenden Ausführungen erfolgen beispielhaft anhand eines Werkzeugträgers 13 gelten jedoch ebenso für die weiteren Werkzeugträger 13.

Zum Bestimmen des Istzustands, also der aktuellen Position des Werkzeugträgers 13, erfasst die Kamera 16 einen Teilbereich des Werkzeugträgers 13 und übermittelt die Bildinformationen der Steuerungseinrichtung 17. Aus den Bildinformationen ermittelt die Steuerungseinrichtung 17 als Parameter des wenigstens einen Werkzeugträgers 17 eine Werkzeugträgerinformation. Diese ist insbesondere eine Werkzeugträgerkante 22 oder Kontur des Werkzeugträgers 13, kann jedoch auch eine Markierung am Werkzeugträger 13 und/oder eine vergleichbare Werkzeugträgerinformation sein. Die Werkzeugträgerinformation, vorzugsweise die Werkzeugträgerkante 22, wird aus den Bildinformationen durch die Steuerungseinrichtung 17 insbesondere durch ein bekanntes Verfahren zur Kantendetektion bestimmt bzw. detektiert.

In Abhängigkeit von der detektierten Werkzeugträgerkante 22 wird durch die Steuerungseinrichtung 17 eine Position des Werkzeugträgers 13 ermittelt. Da die Position der Kamera 16 bekannt ist, wird anhand der detektierten Werkzeugträgerkante 22 sowie in Abhängigkeit einer bekannten Sensorgröße der Kamera 16 ein relativer Abstand a zwischen dem Werkzeugträger 13 und der Kamera 16 ermittelt. Aus diesem relativen Abstand a zwischen dem Werkzeugträger 13 und der Kamera 16 wird die absolute Position des Werkzeugträgers 13 ermittelt. Durch die Ermittlung der absoluten Position des Werkzeugträgers 13 kann das Bearbeitungswerkzeug 12 für den Bearbeitungsvorgang zum Werkstück manuell oder automatisiert ausgerichtet werden.

Bei dieser Bestimmung der Position des Werkzeugträgers 13 können die Bildinformationen durch die Steuerungseinrichtung 17 in ein Binärbild 23 umgewandelt werden. Ein solches Binärbild 23 ist exemplarisch in Figur 5 dargestellt. Durch die Umwandlung der Bildinformationen in das Binärbild 23 wird jedes Pixel der Bildinformationen durch nur ein Bit dargestellt. Beispielsweise entspricht der Wert 0 Schwarz und der Wert 1 Weiß. Auf diese Weise wird ein Schwarz-Weiß-Bild erzeugt, bei welchem alle Bildinformationen abweichend zur Werkzeugträgerkante 22 schwarz dargestellt sind und nur die Werkzeugträgerkante 22 weiß. Dadurch ist eine zuverlässige Erkennung der Werkzeugträgerkante 22 oder auch einer Werkzeugträgermarkierung und/oder vergleichbaren Werkzeugträgerinformation ermöglicht, um in Abhängigkeit davon die Position des Werkzeugträgers 13 zu bestimmen.

Eine alternative Bestimmung der Position des Werkzeugträgers 13 kann durch das Erfassen des Istzustands des Werkzeugträgers 13 durch zwei zueinander beabstandete Kameras 16 der Bilderfassungseinrichtung 11 erfolgen, wie dies beispielsweise in Figur 1 dargestellt ist.

Dabei wird der Istzustand des Werkzeugträgers 13 durch zwei Kameras 16 aus zwei unterschiedlichen Bildwinkeln erfasst. Dadurch wird der Werkzeugträger 13 aus zwei unterschiedlichen Kamerawinkeln bzw. Kamerapositionen optisch erfasst. Diese Bildinformationen werden der Steuerungseinrichtung 17 übermittelt, welche die Bildinformationen der einen Kamera 16 sowie die Bildinformationen der zweiten Kamera 16 übereinander lagert. Auf diese Weise entsteht ein Stereobild des Werkzeugträgers 13, wobei durch die unterschiedlichen Bildwinkel eine Disparität zwischen den Bildinformationen der beiden Kameras 16 auftritt. Die Steuerungseinrichtung 17 führt anhand dieser Bildinformationen ein bekanntes Verfahren zur stereo-optischen Abstandsberechnung durch, um die Position des Werkzeugträgers 13 zu bestimmen.

Hierfür wird durch die Steuerungseinrichtung 17 in Abhängigkeit einer Proportionalität zwischen dem bekannten Abstand zwischen den beiden Kameras 16 und der ermittelten Disparität zwischen den Bildinformationen der einen Kamera 16 und den Bildinformationen der zweiten Kamera 16, insbesondere einer Disparität zwischen korrespondierenden Pixeln aus den jeweiligen Bildinformationen, eine Entfernung zwischen dem Werkzeugträger 13 und den Kameras 16 bestimmt. Aus dieser Entfernung kann die absolute Position des Werkzeugträgers 13 ermittelt werden. Zur Erkennung des wenigstens einen Werkzeugträgers 13 aus den Bildinformationen kann die Steuerungseinrichtung 17 einen Datensatz von Werkzeugträgern 13 umfassen, um diese aus den erfassten Bildinformationen zu bestimmen. Ebenso kann die Steuerungseinrichtung 17 einen selbstlernenden Algorithmus zur Erkennung der Werkzeugträger 13 oder der Bearbeitungswerkzeuge 12 aufweisen.

In Abhängigkeit von der ermittelten Position des Werkzeugträgers 13 kann entweder die Ausgabeeinheit 21 angesteuert werden, um dem Bediener die Position des Werkzeugträgers 13 bzw. des Bearbeitungswerkzeugs 12 auszugeben oder es kann die Positioniereinrichtung 14 angesteuert werden, um den Werkzeugträger 13 bzw. das Bearbeitungswerkzeug 12 für den Bearbeitungsvorgang zum zu bearbeitenden Werkstück automatisiert zu positionieren.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Verfahren zum Überwachen und Steuern einer Werkzeugmaschine (10) für die Bearbeitung von Werkstücken, insbesondere Werkstücke, die zumindest teilweise aus Holz, einem Holzwerkstoff, Kunststoff oder Verbundwerkstoff ausgebildet sind, mit einer Mehrzahl Bearbeitungswerkzeuge (12) zum Ausführen eines Bearbeitungsvorgangs sowie mit wenigstens einem Werkzeugträger (13), der die Mehrzahl Bearbeitungswerkzeuge (12) aufnimmt, wobei das Verfahren die Schritte aufweist, dass
- zumindest ein Istzustand der Bearbeitungswerkzeuge (12) und/oder des wenigstens einen Werkzeugträgers (13) durch eine Bilderfassungseinrichtung (11) optisch erfasst wird und Bildinformationen des zumindest einen Istzustands einer Steuerungseinrichtung (17) übermittelt werden,
- wobei die Bilderfassungseinrichtung durch nur eine Kamera (16) ausgebildet ist;
- aus den Bildinformationen zumindest ein Parameter der Bearbeitungswerkzeuge (12) und/oder des wenigstens einen Werkzeugträgers (13) ermittelt wird, und
- die Steuerungseinrichtung (17) in Abhängigkeit von dem zumindest einen Parameter ein Steuerungssignal ausgibt,
wobei
- vor dem Ausführen des Bearbeitungsvorgangs und/oder nach einem Einwechseln wenigstens eines Bearbeitungswerkzeugs (12) ein Sollzustand der Bearbeitungswerkzeuge (12) durch die Bilderfassungseinrichtung (11) optisch erfasst wird und Bildinformationen des optisch erfassten Sollzustands der Steuerungseinrichtung (17) übermittelt werden,
- der Istzustand der Bearbeitungswerkzeuge (12) in definierten Zeitintervallen oder nach einer definierten Anzahl Bearbeitungsvorgänge durch die Bilderfassungseinrichtung (11) optisch erfasst wird, wobei
- die Bilderfassungseinrichtung (11) zum Erfassen des Sollzustands und zum Erfassen des Istzustands die Bearbeitungswerkzeuge (12) gleichzeitig optisch erfasst, und
- der Istzustand und der Sollzustand durch die Steuerungseinrichtung (17) miteinander verglichen werden und bei einer ermittelten Abweichung zwischen dem Istzustand und dem Sollzustand ein Werkzeugdefekt identifiziert wird und das Steuerungssignal ausgegeben wird, wobei
- aus den Bildinformationen des Sollzustands und aus den Bildinformationen des Istzustands von jedem Bearbeitungswerkzeug (12) wenigstens ein Werkzeugparameter ermittelt wird und von jedem Bearbeitungswerkzeug (12) der wenigstens eine Werkzeugparameter des Istzustands mit dem wenigstens einen Werkzeugparameter des Sollzustands verglichen wird und bei einer Abweichung zwischen den Werkzeugparametern der Werkzeugdefekt des jeweiligen Bearbeitungswerkzeugs (12) identifiziert wird und das Steuerungssignal ausgegeben wird.

2. Verfahren nach Anspruch 1, bei dem ferner aus den Bildinformationen des zumindest einen Istzustands und/oder des Sollzustands ein dreidimensionales Modell wenigstens eines Bearbeitungswerkzeugs (12) und/oder des wenigstens einen Werkzeugträgers (13) durch die Steuerungseinrichtung (17) erstellt wird und der zumindest eine Parameter aus dem dreidimensionalen Modell der Bildinformationen ermittelt wird.

3. Verfahren nach Anspruch 1 oder 2, bei dem ferner der zumindest eine aus den Bildinformationen des Sollzustands und aus den Bildinformationen des Istzustands ermittelte Parameter der Werkzeugparameter der Bearbeitungswerkzeuge (12) ist, insbesondere eine Werkzeugform, eine Werkzeuglänge, ein Werkzeugdurchmesser und/oder ein vergleichbarer Werkzeugparameter, wobei durch die Steuerungseinrichtung (17) der wenigstens eine Werkzeugparameter des Istzustands mit dem wenigstens einen Werkzeugparameter des Sollzustands verglichen wird und bei einer Abweichung zwischen dem Werkzeugparameter des Istzustands und dem Werkzeugparameter des Sollzustands der Werkzeugdefekt des wenigstens einen Bearbeitungswerkzeugs (12) identifiziert wird und das Steuerungssignal ausgegeben wird.

4. Verfahren nach einem der vorhergehenden Ansprüche, bei dem ferner durch das Steuerungssignal eine Ausgabeeinheit (21) angesteuert wird und ein Fehlersignal über die Ausgabeeinheit (21) ausgegeben wird oder durch das Steuerungssignal die Werkzeugmaschine (10) angesteuert wird und in einen Fehlerzustand überführt wird oder durch das Steuerungssignal ein automatisierter Werkzeugwechsel für das defekte Bearbeitungswerkzeug (12) angesteuert wird.

5. Werkzeugmaschine (10) zum Bearbeiten von Werkstücken, insbesondere Werkstücke, die zumindest teilweise aus Holz, einem Holzwerkstoff, Kunststoff oder Verbundwerkstoff ausgebildet sind, mit einer Mehrzahl Bearbeitungswerkzeuge (12) zum Ausführen eines Bearbeitungsvorgangs sowie mit einer Werkstückaufnahme (15) zum Aufnehmen wenigstens eines zu bearbeitenden Werkstücks, **dadurch gekennzeichnet, dass** eine Bilderfassungseinrichtung (11) vorgesehen ist, wobei die Bilderfassungseinrichtung durch nur eine Kamera (16) ausgebildet ist; durch die ein Sollzustand und/oder ein Istzustand der Bearbeitungswerkzeuge (12) und/oder des wenigstens einen Werkzeugträgers (13) optisch erfassbar ist sowie eine Steuerungseinrichtung (17), durch die ein Verfahren nach einem der Ansprüche 1 bis 4 ausführbar ist.

## Claims

1. Method for monitoring and controlling a machine tool (10) for the machining of workpieces, in particular workpieces which are formed, at least partially, of wood, a wood-based material, plastic or composite, with a plurality of processing tools (12) for carrying out a processing operation and with at least one tool carrier (13) which holds the plurality of processing tools (12), wherein the method has the steps that
- at least one actual state of the processing tools (12) and/or of the at least one tool carrier (13) is captured optically by an image scanning device (11) and image information on the at least one actual state is transmitted to a control device (17),
- wherein the image scanning device is formed by only one camera (16);
- at least one parameter of the processing tools (12) and/or of the at least one tool carrier (13) is determined from the image information, and
- the control device (17) outputs a control signal depending on the at least one parameter, wherein
- before carrying out the processing operation and/or after changing in at least one processing tool (12), a target state of the processing tools (12) is captured optically by the image scanning device (11) and image information on the optically captured target state is transmitted to the control device (17),
- the actual state of the processing tools (12) is optically captured by the image scanning device (11) at defined time intervals or after a defined number of processing operations, wherein
- in order to capture the target state and in order to capture the actual state, the image scanning device (11) optically scans the processing tools (12) simultaneously, and
- the actual state and the target state are compared with each other by the control device (17) and, if a deviation between the actual state and the target state is determined, a tool defect is identified and the control signal is output, wherein
- at least one tool parameter is determined from the image information on the target state and from the image information on the actual state of each processing tool (12) and the at least one tool parameter of the actual state of each processing tool (12) is compared with the at least one tool parameter of the target state and, in the event of a deviation between the tool parameters, the tool defect of the respective processing tool (12) is identified and the control signal is output.

2. Method according to claim 1, wherein furthermore a three-dimensional model of at least one processing tool (12) and/or of the at least one tool carrier (13) is created by the control device (17) from the image information on the at least one actual state and/or the target state, and the at least one parameter is determined from the three-dimensional model of the image information.

3. Method according to claim 1 or 2, wherein furthermore the at least one parameter determined from the image information on the target state and from the image information on the actual state is the tool parameter of the processing tools (12), in particular a tool shape, a tool length, a tool diameter and/or a comparable tool parameter, wherein the at least one tool parameter of the actual state is compared with the at least one tool parameter of the target state by the control device (17) and, in the event of a deviation between the tool parameter of the actual state and the tool parameter of the target state, the tool defect of the at least one processing tool (12) is identified and the control signal is output.

4. Method according to one of the preceding claims, wherein furthermore an output unit (21) is actuated by the control signal and an error signal is output via the output unit (21), or the machine tool (10) is controlled by the control signal and is placed into a fault status, or an automated tool change for the defective processing tool (12) is actuated by the control signal.

5. Machine tool (10) for machining workpieces, in particular workpieces which are, at least partially, formed of wood, a wood-based material, plastic or composite, with a plurality of processing tools (12) for carrying out a processing operation and with a workpiece holder (15) for holding at least one workpiece which is to be processed, **characterised in that** an image scanning device (11) is provided, wherein the image scanning device is formed by only one camera (16);
by means of which a target state and/or an actual state of the processing tools (12) and/or of the at least one tool carrier (13) can be captured optically, as well as a control device (17) by means of which a method according to one of the claims 1 to 4 can be carried out.

## Revendications

1. Procédé de surveillance et de commande d'une machine-outil (10) pour le traitement de pièces, en particulier de pièces qui sont formées au moins partiellement en bois, en un matériau à base de bois, en matière plastique ou en matériau composite, comportant une pluralité d'outils de traitement (12) permettant d'exécution d'une opération de traitement ainsi que comportant au moins un porte-outil (13) qui reçoit la pluralité d'outils de traitement (12), dans lequel le procédé présente les étapes selon lesquelles
- au moins un état réel des outils de traitement (12) et/ou de l'au moins un porte-outil (13) est capturé optiquement par un dispositif (11) de capture d'image et des informations d'image de l'au moins un état réel d'un dispositif de commande (17) sont déterminées,
- dans lequel le dispositif de capture d'image est formé par uniquement une caméra (16) ;
- au moins un paramètre des outils de traitement (12) et/ou de l'au moins un porte-outil (13) est établi à partir des informations d'image et
- le dispositif de commande (17) délivre, en fonction de l'au moins un paramètre, un signal de commande, dans lequel
- avant l'exécution de l'opération de traitement et/ou après un remplacement d'au moins un outil de traitement (12), un état de consigne des outils de traitement (12) est capturé optiquement par le dispositif (11) de capture d'image et des informations d'image de l'état de consigne capturé optiquement du dispositif de commande (17) sont déterminées,
- l'état réel des outils de traitement (12) est capturé optiquement par le dispositif (11) de capture d'image à des intervalles de temps définis ou après un nombre défini d'opérations de traitement, dans lequel
- le dispositif (11) de capture d'image capture optiquement en même temps les outils de traitement (12) pour la capture de l'état de consigne et pour la capture de l'état réel et
- l'état réel et l'état de consigne sont comparés l'un à l'autre par le dispositif de commande (17) et, lors d'un écart déterminé entre l'état réel et l'état de consigne, un défaut d'outil est identifié et le signal de commande est délivré, dans lequel
- au moins un paramètre d'outil étant déterminé à partir des informations d'image de l'état de consigne et à partir des informations d'image de l'état réel de chaque outil de traitement (12) et, à partir de chaque outil de traitement (12), l'au moins un paramètre d'outil de l'état réel étant comparé à l'au moins un paramètre d'outil de l'état de consigne et, lors d'un écart entre les paramètres d'outil, le défaut d'outil de l'outil de traitement (12) respectif étant identifié et le signal de commande étant délivré.

2. Procédé selon la revendication 1, dans lequel en outre, à partir des informations d'image de l'au moins un état réel et/ou de l'état de consigne, un modèle tridimensionnel d'au moins un outil de traitement (12) et/ou de l'au moins un porte-outil (13) est généré par le dispositif de commande (17) et l'au moins un paramètre est déterminé à partir du modèle tridimensionnel des informations d'image.

3. Procédé selon la revendication 1 ou la revendication 2, dans lequel en outre l'au moins un paramètre déterminé à partir des informations d'image de l'état de consigne et à partir des informations d'image de l'état réel est le paramètre d'outil des outils de traitement (12), en particulier une forme d'outil, une longueur d'outil, un diamètre d'outil et/ou un paramètre d'outil comparable, dans lequel l'au moins un paramètre d'outil de l'état réel est comparé à l'au moins un paramètre d'outil de l'état de consigne par le dispositif de commande (17) et, lors d'un écart entre le paramètre d'outil de l'état réel et le paramètre d'outil de l'état de consigne, le défaut d'outil de l'au moins un outil de traitement (12) est identifié et le signal de commande est délivré.

4. Procédé selon l'une des revendications précédentes, dans lequel en outre une unité de délivrance (21) est commandée par le signal de commande et un signal d'erreur est délivré par le biais de l'unité de délivrance (21) ou la machine-outil (10) est commandée par le signal de commande et est transférée dans un état d'erreur ou un remplacement d'outil automatique pour l'outil de traitement (12) défectueux est commandé par le signal de commande.

5. Machine-outil (10) de traitement de pièces, en particulier de pièces qui sont formées au moins partiellement en bois, en un matériau à base de bois, en matière plastique ou en matériau composite, comportant une pluralité d'outils de traitement (12) pour l'exécution d'une opération de traitement ainsi que comportant un logement de pièce (15) permettant de recevoir au moins une pièce à usiner, **caractérisée en ce qu'**un dispositif (11) de capture d'image est prévu, dans lequel le dispositif de capture d'image est formé par uniquement une caméra (16) ; permettant de capturer optiquement un état de consigne et/ou un état réel de l'outil de traitement (12) et/ou de l'au moins un porte-outil (13) ainsi qu'un dispositif de commande (17), permettant la mise en oeuvre d'un procédé selon l'une des revendications 1 à 4.
